# EUROPEAN PATENT APPLICATION

(11) **EP 1 739 800 A2**
(43) Date of publication of application: **03.01.2007**
(21) Application number: 06253326.0
(22) Date of filing: 27.06.2006
(51) Int. Cl.: H01R 24/04, H01R 13/66

(54) **Cash base unit**

(30) Priority: 27.06.2005 GB 0513068
(71) Applicant: Cash Bases Limited, New Haven, East Sussex BN9 0LA (GB)
(72) Inventor: Duncan, Vivian F., Eastbourne, East Sussex BN22 0EL (GB)
(74) Representative: Leckey, David Herbert

(57) **Abstract**

A cash base unit having a solenoid operable at a predetermined voltage, is provided with a connector for connection to an external device such as a cash register, and which has circuitry which is capable of receiving a plurality of voltages and adapts the received voltage to the operating voltage of the solenoid.

## Description

The present invention relates to cash base units and in particular to cash base units having solenoid operated opening mechanisms.

Cash base units commonly have a lid or drawer opening mechanism which is operated by a solenoid. Typically one end of an electric cable is wired to the solenoid and is taken out through the back of the cash drawer as a flying lead, the other end of the cable having an appropriate connector for connection to the circuitry which controls the firing of the solenoid, for example in a cash register associated with the cash drawer.

The problem has arisen, however, that solenoids are required to operate at different signal voltages depending on the Point of Sale (POS) unit or receipt printer being used, as a standard cash drawer may be used with different POS units or receipt printers. This makes the electrical connections to the solenoid and the control circuitry more difficult.

The present invention seeks to overcome this problem and from a first aspect provides a cash base unit having a solenoid operable at a predetermined voltage, an electrical connector, for connection to an external voltage, said connector having associated circuitry which is capable of receiving a plurality of voltages and which adapts the received voltage to the operating voltage of the solenoid.

With such an arrangement, the applicable voltage can be input to a terminal of the connector the socket through a compatible connector. There are no trailing leads which considerably facilitates transportation of the units. The circuitry associated with the connector automatically adapts the input to the solenoid.

Preferably the connector is mounted in, to or behind a wall af the unit and is accessible externally of the unit.

Preferably the unit mounted connector is a socket connector, the corresponding plug connector being fitted to a lead connected to the POS unit, printer etc..

The socket may be provided in a side wall, rear wall, top wall or base wall of the cash drawer.

The connector can be any connector capable of receiving multiple voltages. An RJ-45 connector is particularly suitable, having multiple terminals for receiving multiple voltage signals.

Preferably the circuitry associated with the connector is provided on a circuit board integrated with the connector. Most simply, the connector can be mounted to the circuit board by any suitable means.

The circuitry preferably includes one or more resistors which adapt the input voltages received on specific terminals of the connector to the solenoid voltage. For example, in a dual voltage arrangement, receiving say 12V and 24V inputs, and a 12V solenoid, the circuitry includes a resistor which drops the 24 V input to 12V for supply to the solenoid.

The invention also extends to a connector for use in the cash base unit of the invention, so from a second aspect, the invention provides an electrical connector for a cash base unit having a solenoid operable at a predetermined voltage, and for connection to said solenoid, said connector having circuitry which is capable of receiving a plurality of voltages and adapts the received voltage to the operating voltage of the solenoid.

The connector may have the preferred features discussed above.

Some preferred embodiments of the invention will now be described by way of example only, with reference to the accompanying drawings in which:
Figure 1 shows a first embodiment of the invention;
Figure 2 shows a second embodiment of the invention;
Figures 3a to 3d show the connector usable in usable in a cash drawer in accordance with the invention; and
Figure 4 shows a circuit diagram for the connector shown in Figures 3a and 3b.

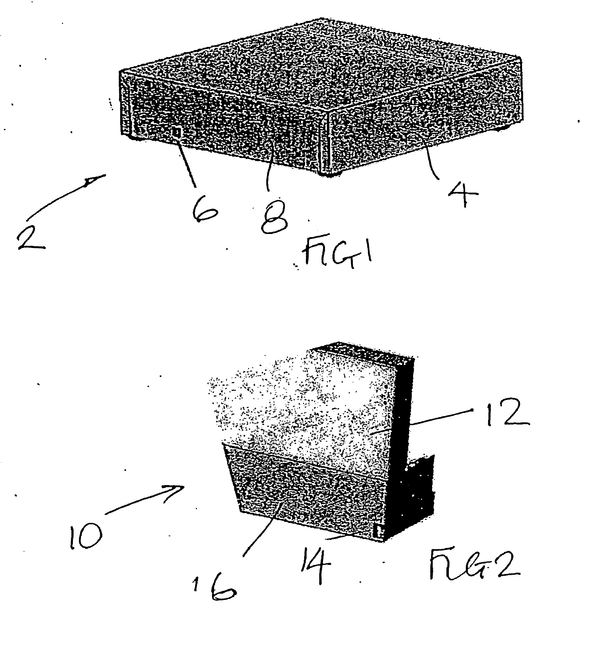

With reference to Figure 1, a cash base unit 2 has a housing 4 which slidably mounts a cash drawer tray (not shown). The cash drawer tray is held in a closed condition by a catch, and is opened when a solenoid (also not shown) which is mounted within the housing is activated by a control signal from an external control such as a POS unit or a receipt printer, and releases the catch. The drawer then opens under the force of an opening spring.

Power is connected to the solenoid through a lead whose other end is provided with an RJ 45 socket 6 arranged in the rear wall 8 of the housing 4. A lead having a mating plug can then be connected between the cash base unit and the control unit when the cash base unit 2 is installed in situ.

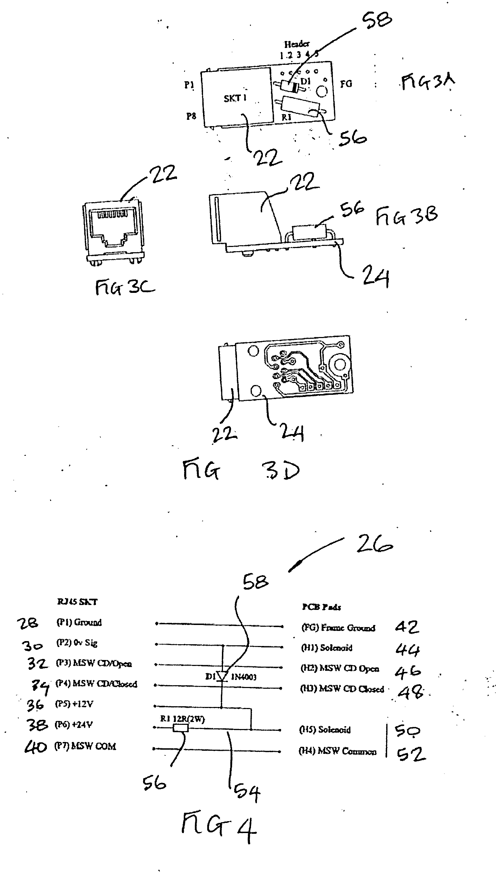

In the embodiment of Figure 2, a cash base unit 10 has a spring loaded flip lid 12 which is opened upon operation of a solenoid (not shown) releasing a catch. The solenoid is coupled to an RJ 45 socket 14 mounted in the lower corner of the rear wall 16 of the unit 10. Again, power is connected to the solenoid via a lead having a mating connector plug.

Figures 3a to 3d illustrate a suitable socket/circuit board 20 for use in the invention. It comprises an RJ 45 socket 22 (e.g. a Selwyn Electronics 3001665800 socket) which is mounted to a printed circuit board 24. The circuit board 22 can be mounted to a convenient surface, for example the base wall of the cash base unit housing.

The terminal pins of the socket connector 22 are suitably connected to input terminal pads on the circuit board 22, while the lead from the solenoid is connected to output terminal pads on the circuit board 24.

The circuitry on the circuit board 24 is shown in Figure 4.

The circuit 26 is connected to seven pins 28, 30, 32, 34, 36, 38, 40 of the socket connector 22, and has six pads 42, 44, 46, 48, 50, 52 connected to the cash base unit. The pins and pads are connected as fallows.

Pin 28 is a ground pin and is connected directly to pad 42 which is connected to the unit frame ground.

Pin 30 is the 0V connection to the control unit, and is connected to pad 44 which is connected to the solenoid.

Pin 32 is connected to pad 46, and this connection carries a cash drawer open signal from a sensor (not shown).

Pin 34 is connected to pad 48 and this connection carries a cash drawer closed signal from a sensor (not shown).

Pin 36 receives a 12V signal from a control unit and is connected to pad 50 which is connected to the solenoid. The voltage across pins 30 and 36 will open the cash drawer when the socket 22 receives a 12V signal.

Pin 38 receives a 24V from a control unit and is also connected to pad 50. The line 54 between the pin 38 and the pad 50 includes a 2W resistance 56 (e.g. a metal oxide or wire wound resistance). The resistance acts to drop the 24V supply down to 12V, such that it is compatible with the solenoid, so a 24V signal received across pins 30 and 38 will also open the cash drawer.

Pin 40 is connected to pad 52 and this connection acts as a common connection for the drawer opening and closing sensor.

A diode 58 extends between the line 30-44 and line 36-50.

Thus it can be seen that the arrangement of the present invention considerably facilitates the connection of cash base units to POS units and the like by accommodating units providing different output voltages.

It will be appreciated that the invention is not limited to dual voltage applications, but can be used for multi voltage applications, provided a sufficient number of input terminals and associated circuitry are provided.

## Claims

1. A cash base unit having a solenoid operable at a predetermined voltage, an electrical connection between said solenoid and an electrical connector for connection to an external voltage, said connector having associated circuitry which is capable of receiving a plurality of voltages and which adapts the received voltage to the operating voltage of the solenoid.

2. A cash base unit as claimed in claim 1 wherein the connector is mounted in, to or behind a wall of the unit and is accessible externally of the unit.

3. A cash base unit as claimed in claim 1 or 2 wherein the unit connector is a socket connector.

4. A cash base unit as claimed in claim 1, 2 or 3 wherein the connector is an RJ-45 connector.

5. A cash base unit as claimed in any preceding claim wherein the circuitry associated with the connector is provided on a circuit board integrated with the connector.

6. A cash base unit as claimed in claim 5 wherein the connector is mounted to the circuit board.

7. A cash base unit as claimed in any preceding claim wherein the circuitry includes one or more resistors which adapt the input voltages received on specific terminals of the connector to the solenoid voltage.

8. A connector for a cash base unit having a solenoid operable at a predetermined voltage, and for connection to said solenoid, said connector having circuitry which is capable of receiving a plurality of voltages and which adapts the received voltage to the operating voltage of the solenoid.

9. A connector as claimed in claim 8 wherein the connector comprises a socket connector.

10. A connector as claimed in claim 8 or 9 wherein the connector is an RJ-45 connector.

11. A connector as claimed in claim 8, 9 or 10 wherein the circuitry is provided on a circuit board integrated with the connector.

12. A connector as claimed in claim 11 wherein the connector is mounted to the circuit board.

13. A connector as claimed in any of claims 8 to 12 wherein the circuitry includes one or more resistors which adapt the input voltages received on specific terminals of the connector to the solenoid voltage.

14. A cash base unit comprising:
a solenoid operable at a predetermined voltage;
an electrical connector for connection to an external voltage; and
circuitry associated with said connector which is capable of receiving a plurality of voltages and which adapts the received voltage to the operating voltage of the solenoid.

15. A cash base unit as claimed in claim 14 wherein said circuitry is integrated with said electrical connector.
